# EUROPEAN PATENT APPLICATION

(11) **EP 2 804 103 A1**
(43) Date of publication of application: **19.11.2014**
(21) Application number: 14167646.0
(22) Date of filing: 09.05.2014
(51) Int. Cl.: G06F 9/54

(54) **System and method for forwarding a command stream**

(30) Priority: 13.05.2013 US 201361822756 P
(71) Applicant: 2236008 Ontario Inc., Waterloo, ON N2K 0A7 (CA)
(72) Inventor: Dodge, Danny Thomas, Kanata, Ontario K2K 0B3 (CA); Belanger, Etienne, Kanata, Ontario K2K 0B3 (CA)
(74) Representative: Roberts, Gwilym Vaughan

(57) **Abstract**

A system and method for forwarding a command stream. A command API may receive a command stream where the command stream contains command information executable as a commands. The command API may process the received command stream to generate a processed command stream where the processed command stream contains equivalent command information to the command information contained in the command stream. A source redirector may encode the processed command stream to generate a formatted command stream. A source protocol stack may send the formatted command stream to a target platform. A target redirector may receive and decode the formatted command stream. The target redirector may process the decoded formatted command stream to generate a target command stream where the target command stream contains equivalent command information contained in the formatted command stream.

## Description

### BACKGROUND

### 1. Priority Claim

This application claims the benefit of priority from U.S. Provisional Application No. 61/822,756, filed May 13, 2013, which is incorporated by reference.

### 2. Technical Field

The present disclosure relates to the field of cross-platform programming environments. In particular, to a system and method for forwarding a command stream.

### 3. Related Art

Numerous mechanisms have been defined, and in some cases standardized, that permit software developers to create applications and other software entities that are agnostic to execution on of any of numerous heterogeneous execution platforms. Such mechanism include, for example, OpenCL ™, WebCL ™, OpenSL ES ™, OpenMAX ™ AL, OpenMAX ™ IL, StreamInput and other similar mechanisms. OpenCL ™ is a trademark of Apple Inc. of Cupertino, CA. WebCL ™, OpenSL ES ™, OpenMAX ™ AL and OpenMAX ™ IL are trademarks of the Khronos Group Inc. of Beaverton, OR. Generally these mechanisms have been contemplated to address issues related to code portability, exploitation of platform computing resources and parallel computing.

It is desirable to have a further mechanism for enabling software entities (e.g. applications) running on a first platform to exploit computing resources on a second platform.

### BRIEF DESCRIPTION OF DRAWINGS

The system may be better understood with reference to the following drawings and description. The components in the figures are not necessarily to scale, emphasis instead being placed upon illustrating the principles of the disclosure. Moreover, in the figures, like referenced numerals designate corresponding parts throughout the different views.

Other systems, methods, features and advantages will be, or will become, apparent to one with skill in the art upon examination of the following figures and detailed description. It is intended that all such additional systems, methods, features and advantages be included with this description and be protected by the following claims.
Fig. 1 is a schematic representation of a system for forwarding a command stream.
Fig. 2 is a representation of a method for forwarding a command stream.
Fig. 3 is a schematic representation of a system for forwarding a command stream.
Fig. 4 is a further representation of a method for forwarding a command stream
Fig. 5 is a further schematic representation of a system for forwarding a command stream.

### DETAILED DESCRIPTION

A system and method for forwarding a command stream.

Many computing devices contain relatively sophisticated processors that may include a central processing unit (CPU), a graphics processing unit (GPU) and an accelerated processing unit (APU). Different vendors may design and produce CPUs, GPUs or APUs where the application programming interface (API) is standardized in order to simplify application development. Standardized command APIs may include OpenCL ™, WebCL ™, OpenSL ES ™, OpenMAX ™ AL, OpenMAX ™ IL, StreamInput and other similar mechanisms. OpenCL ™ is a trademark of Apple Inc. of Cupertino, CA. WebCL ™, OpenSL ES ™, OpenMAX ™ AL and OpenMAX ™ IL are trademarks of the Khronos Group Inc. of Beaverton, OR. Applications may utilize a standardized command API, or command API, to execute commands where the execution is directed to one or more execution devices having compute units (CU) such as, for example CPU, GPU or APU. The command API does not have to be standardized. An application utilizing the command API sends commands, or a command stream, to one or more execution devices. The command API allows the one or more execution devices to return responses to the application.

Alternatively, when the target platform has one or more execution devices, the command stream created by the application executing on the source platform may be executed by the one or more execution devices on the target platform. In this case the command stream execution occurs on the target platform.

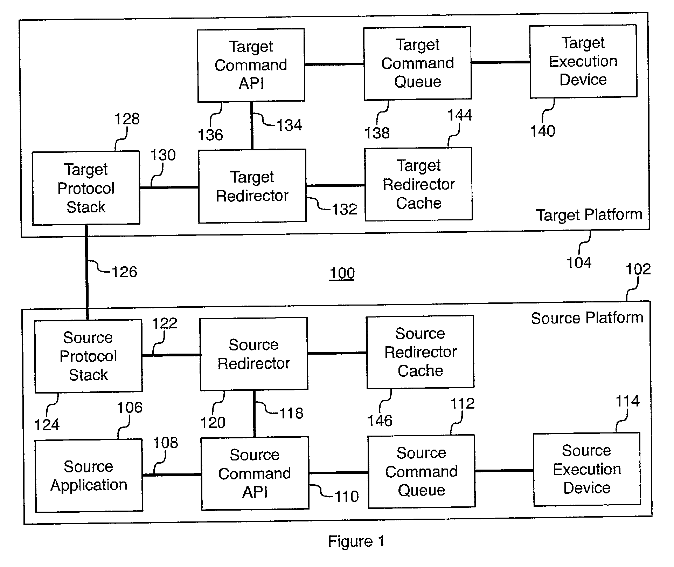

Figure 1 is a schematic representation of a system for forwarding a command stream. The command stream may be a platform agnostic command stream. The system 100 may include a source platform 102 and a target platform 104. The source platform 102 and the target platform 104 may be executing on separate computing devices. For example, the source platform 102 may be executing on a mobile phone while the target platform 104 may be a laptop computer. The mobile phone executing the source platform 102 may utilize a different operating system than the laptop computer executing the target platform 104. The source platform 102 and the target platform 104 may include differing numbers and types of execution devices having computing units (CU) such as, for example, CPU, GPU and APU. In another example, both the source platform 102 and the target platform 104 may be executing on the same computing device. The source platform 102 and the target platform 104 may comprise the same, similar or different CPUs, the same, similar or different GPUs and the same, similar or different APUs.

The source platform 102 may include a source application 106 that communicates with a source command API 110 using a source command stream 108. The source application 106 utilizes the source command stream 108 to issue commands (e.g. OpenCL kernels) that the source command API 110 directs to one or more execution devices for execution. The source command stream 108 may be in a platform-agnostic API format utilized by the source command API 110. For example, the API format of the source command stream 108 may be that of any of OpenCL ™, WebCL ™, OpenSL ES ™, OpenMAX ™ AL, OpenMAX ™ IL, StreamInput and other similar mechanisms. The command API format may be referred to as a source command semantic and the source command stream 108 may be referred to as a command stream. The source command stream 108 may contain both commands and data sent by the source application 106 to the source command API 110. The source command stream 108 may also contain both responses and data returned by the source command API 110 to the source application 106. The content in the command stream between the source application 106 and the source command API 110 may be referred to as command information. The source command API 110 may be capable of directing the commands contained within the command stream 110 into one or more of the source command queues 112. One or more source execution devices 114 may execute the commands in the one or more source command queues 112. Utilizing a command API, or command semantic, allows the source application 106 to be agnostic of the implementation details of the source command API 110 to execute the commands contained in the command stream 108.

The source command API 110 uses the command information sent by the source application 106 to direct commands in the source command stream 108 into one or more of the source command queues 112. The source platform 102 may utilize the source application 106, the source command API 110, the source command queue 112, and the source execution device 114 to provide for execution of the commands contained in the source command stream 108.

A different approach may be utilized for the source platform 102 to provide for execution of the commands contained in the source command stream 108 on the target platform 104. One approach may comprise sending, or forwarding, the source command stream 108 to the target platform 104. Forwarding the source command stream 108 created by the source application 106 may comprise the source application 106 sending the command stream 108 to the source command API 110. The source command API 110 may process the source command stream 108 to create a processed command stream 118. The processed command stream 118 may be derived from a logging stream output by the source command API 110 or another output of the source command API 110. The processed command stream 118 may contain equivalent command information to cause the same execution as the source command stream 108.

A source redirector 120 receives the processed command stream 118. The processed command stream 118 may contain command information similar or equivalent to the source command stream 108 although neither the actual content nor the sequence of the two streams may be identical. In one example, the processed command stream 118 may be identical to the source command stream 108. The source command API 110 may modify the command information, for example, to reduce redundancy of commands. For example, the source application 106 may send a repeated request to execute the same command (e.g. kernel). The source command API 110 may only process the first request and remove the repeated requests from the processed command stream 118 when the request is the same or redundant.

The source redirector 120 may receive the processed command stream 118 and encode a source formatted command stream 122. The source redirector 120 may further process the command information received in the processed command stream 118. Further processing may include, for example, reducing redundancy of the command information, compressing the command information and responding to commands in the command information. Compressing command information may reduce the size of the command information encoded into the source formatted command stream 122. A lossless compression technique including run length encoding may be utilized. The source redirector 120 may utilize a source redirector cache 146 for processing the command information. The source redirector cache 146 may be a memory that is accessed and controlled by the source redirector 120 or the source redirector cache 146 may be any component that may store command information. The source redirector 120 may, for example, use command information stored in the source redirector cache 146 to send a response to the source command API 110 instead of encoding the request for response in the formatted command stream 122.

The source formatted command stream 122 may contain equivalent command information to cause the same command execution as the source command stream 108 and additional metadata for decoding on the target platform 104. The metadata may include, for example, initialization instructions, synchronization information, timing information, error correction codes, retransmission requests, or other similar metadata. The source formatted command stream 122 may interleave the command information with the additional metadata. The source formatted command stream 122 may be in the format of an intermediate command semantic.

The command information predominately flows forward from the source platform 102 to the target platform 104 where the command information contains commands and data that may be executed using the target platform 104. Command information may also flow backwards from the source platform 102 to the target platform 104 where the command information contains responses and data. For example, the source application 106 may send a command that requests a current status indicator. The response containing the current status indicator may be returned via the source formatted command stream 122, the processed command stream 118 and the source command stream 108. Some responses may have a large amount of data. The command information may flow in both directions so each of the subcomponents handling command information described herein may handle bidirectional communication. For example, the source redirector 120 may receive and decode the source formatted command stream 122 where the decoding may be similar to the decoding in the target redirector 132 described below.

A source protocol stack 124 may transmit the source formatted command stream 122 to the target platform 104 as a protocol stream 126. The source protocol stack 124 may be, for example, a Transmission Control Protocol / Internet Protocol (TCP/IP) stack. The protocol stream 126 may be delivered using a TCP or a User Datagram Protocol (UDP). When UDP is used as the transport mechanism for the formatted command stream 122, the formatted command stream 122 may include metadata that both the source platform 102 and the target platform 104 may use to determine packet order or to identify missing packets in the protocol stream 126. The protocol stream 126 may be transported using wireless or wired networks that may include, for example, Ethernet, WI-FI® or BLUETOOTH®. WI-FI® is a registered trademark of Wireless Ethernet Compatibility Alliance, Inc. of Austin, Texas. BLUETOOTH® is a registered trademark of the Bluetooth Special Interest Group of Kirkland, Washington. In an example embodiment target platform 104 may comprise one or more processes executing on the same computing device as the source platform 102 in which case the protocol stream 126 may be transported by a communication method in the operating system such as, for example, an inter-process messaging mechanism.

A target protocol stack 128 executing as part of the target platform 104 receives the protocol stream and outputs a target formatted command stream 130. The target protocol stack 128 may provide the same or similar networking services as the source protocol stack 128. For example both the target protocol stack 128 and the source protocol stack 128 may utilize TCP/IP. The target formatted command stream 130 may be identical to the source formatted command stream 122, for example, when the protocol stream 126 contains no transmission errors.

A target redirector 132 may receive the target formatted command stream 130. The target redirector 132 decodes the target formatted command stream 130 into a target command stream 134. The target formatted command stream 130 may be in the format of the intermediate command semantic. The target command stream 134 may be in the format of a command API, or target command semantic. The target command stream 134 may be in the same command API format as the source command stream 108 created by the source application 106. Alternatively, the target redirector 132 may create a target command stream 134 utilizing a different command API. The target redirector 132 may convert or translate the command information between two different command APIs. The target command stream 134 may be identical to the source command stream 108 although processing in the source command API 110, the source redirector 120 and the target redirector 132 may result in the target command stream 134 and the source command stream 108 to be different. The target command stream 132 may contain equivalent command information to cause the same or a similar execution of the source command stream 108.

The target redirector 132 may receive the target formatted command stream 130 and process the metadata contained therein. For example, the target redirector 132 may use the metadata to initialize the internal decoding states, apply error correction codes, reorder the stream into the correct sequence or request retransmission of missing command information content. The target redirector 132 may decode and reverse the processing performed by the source redirector 120. For example, the target redirector 132 may decompress command information that may have been compressed by the source redirector 120 in order to restore the command information.

The target redirector 132 may utilize a target redirector cache 144 similar to the source redirector cache 146 to store command information. The stored command information in the target redirector cache 144 may be utilized to reduce the amount of command information transmitted between the source platform 102 and the target platform 104. When the source redirector 120 is aware of the contents in the target redirector cache 144, the source redirector 120 may encode an instruction to the target redirector 132 to use the stored command information instead of sending the command information in the source formatted command stream 122. Encoding an instruction to utilize command information in a cache 144 may reduce the amount of data transmitted between the source platform 102 and the target platform 104.

The source redirector 120 and the target redirector 132 may synchronize the source redirector cache 146 and the target redirector cache 144 by storing the most recent commands. A finite number of commands may be stored or a fixed amount of storage may be used. Alternatively, metadata in the source formatted command stream 122 and the target formatted command stream 130 may be used to dynamically manage the command information in the source redirector cache 146 and the target redirector cache 144.

The target redirector 132 sends the target command stream 134 to a target command API 136. The target command API 136 may provide similar functionality to that of source command API 110 although the target command API 136 need not be implemented with identical software or hardware to that of the source command API 110. The target command API 136 receives the target command stream 134 from the target renderer 132. The target redirector 132 may appear to the target command API 134 as another application sending command information.

The target redirector 132 sends and receives the target command stream 134 to and from the target command API 136. The target redirector 132 may encode the received target command stream 134 to generate the target formatted command stream 130. The target redirector 132 may apply similar processing of the command information to that of the source redirector 120. For example, the target redirector 132 may compress the command information. The target redirector 132 may add metadata to the target formatted command stream 130.

The target command API 134 uses the command information sent by the target redirector 132 to direct the command stream to one or more of the target command queues 138. The target execution device 140 may execute the commands in the one or more target command queues 138. The target platform 104 may utilize the target redirector 132, the target command API 136, the target command queue 138, and the target execution device 140 to execute commands in the command stream.

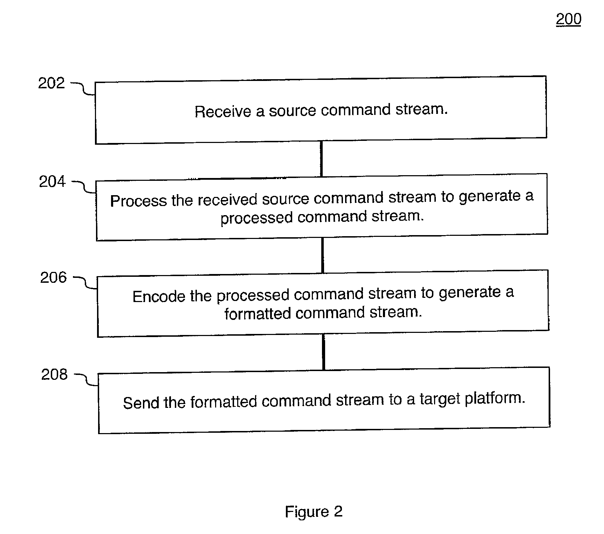

Figure 2 is a representation of a method for forwarding a command stream. The method 200 may be, for example, implemented using the system 100 described herein with reference to Figure 1. The method 200 includes the act of receiving a source command stream 108, encoded for rendering by a source platform 104 using a source command semantic, where the source command stream 108 contains command information including commands executable by one or more execution devices. The received source command stream 108 may be processed to generate a processed command stream 118 where the processed command stream contains equivalent command information to the command information contained in the source command stream 204. The processed command stream 118 may be encoded to generate a formatted command stream 206. The source formatted command stream 122 may be in the format of an intermediate command semantic. The formatted command stream 122 may be sent to a target platform 104 where the formatted command stream 122 is convertible to a target command semantic executable by the target platform 208. The act of sending 208 may further comprise transmitting the formatted command stream 122 as a protocol stream 126 or as an inter-process message sequence.

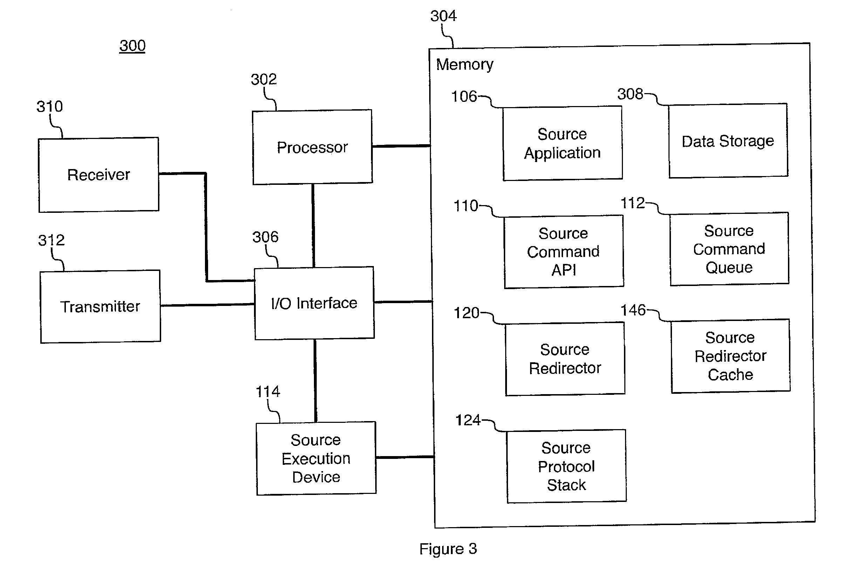

Figure 3 is a schematic representation of a system for forwarding a command stream embodied in the source platform 102. The system 300 comprises a processor 302, memory 304 (the contents of which are accessible by the processor 302) and an I/O interface 306. The memory 304 may store instructions which when executed using the processor 302 may cause the system 300 to render the functionality associated with forwarding a command stream as described herein. For example, the memory 304 may store instructions which when executed using the processor 302 may cause the system 300 to render the functionality associated with the source application 106, the source command API 110, the source redirector 120, the source redirector cache 146 and the source protocol stack 124 as described herein. In addition, data structures, temporary variables and other information may store data in data storage 308.

The processor 302 may comprise a single processor or multiple processors that may be disposed on a single chip, on multiple devices or distributed over more that one system. The processor 302 may be hardware that executes computer executable instructions or computer code embodied in the memory 304 or in other memory to perform one or more features of the system. The processor 302 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 304 may comprise a device for storing and retrieving data, processor executable instructions, or any combination thereof. The memory 304 may include non-volatile and/or volatile memory, such as a random access memory (RAM), a read-only memory (ROM), an erasable programmable read-only memory (EPROM), or a flash memory. The memory 304 may comprise a single device or multiple devices that may be disposed on one or more dedicated memory devices or on a processor or other similar device. Alternatively or in addition, the memory 304 may include an optical, magnetic (hard-drive) or any other form of data storage device.

The memory 304 may store computer code, such as the source application 106, the source command API 110, the source redirector 120, the source redirector cache 146 and the source protocol stack 124 as described herein. The computer code may include instructions executable with the processor 302. The computer code may be written in any computer language, such as C, C++, assembly language, channel program code, and/or any combination of computer languages. The memory 304 may store information in data structures including, for example, vertices. The memory 304 may store commands in the source command queue 112.

The I/O interface 306 may be used to connect devices such as, for example, a source receiver 310, a source transmitter 312, the source execution device 114 and to other components of the system 300.

All of the disclosure, regardless of the particular implementation described, is exemplary in nature, rather than limiting. The system 300 may include more, fewer, or different components than illustrated in Figure 3. Furthermore, each one of the components of system 300 may include more, fewer, or different elements than is illustrated in Figure 3. Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

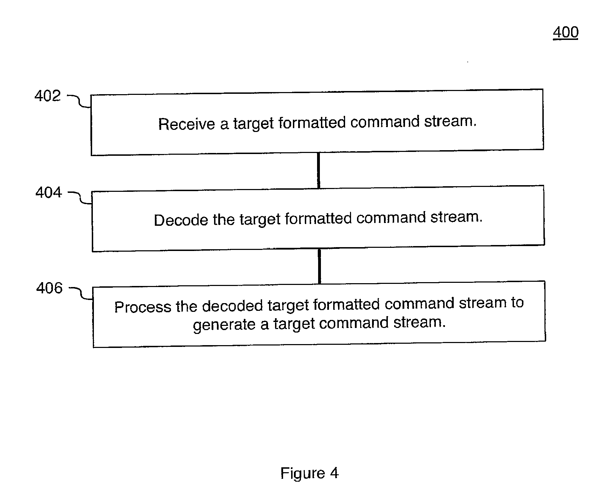

Figure 4 is a further representation of a method for forwarding a command stream. The method 400 may be, for example, implemented using the system 100 described herein with reference to Figure 1. The method 400 includes the act of receiving a target formatted command stream 130, encoded using an intermediate command semantic, where the target formatted command stream contains command information including commands executable by one or more execution devices. The act of receiving 402 may further comprise receiving a protocol stream 126 or as an inter-process message sequence and converting it to the target formatted command stream 130. The target formatted command stream 130 may be decoded 404. The decoded target formatted command stream may be processed to generate a target command stream 134, encoded for execution by the target platform 104 using a target command semantic, where the target command stream 134 contains equivalent command information contained in the target formatted command stream 406. The method 400 may further comprise the act of executing the target command stream 134.

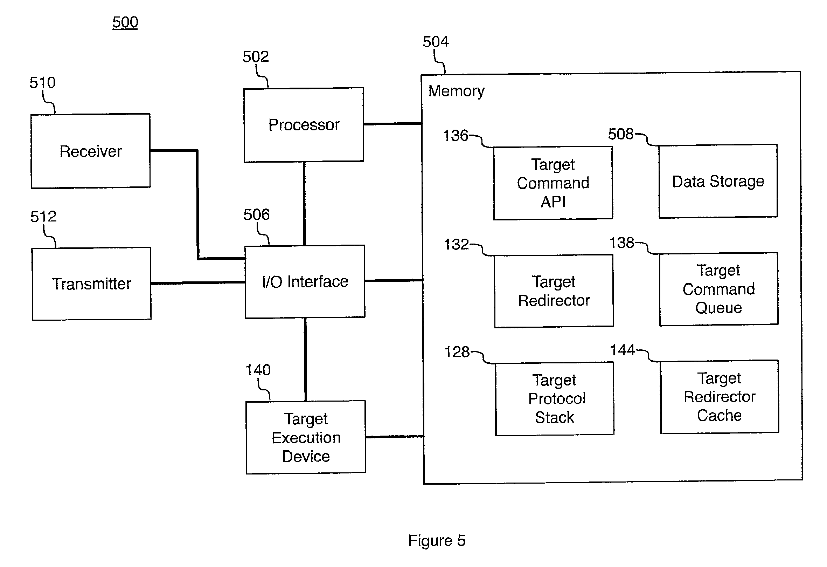

Figure 5 is a further schematic representation of a system for forwarding a command stream embodied in the target platform 104. The system 500 comprises a processor 502, memory 504 (the contents of which are accessible by the processor 502) and an I/O interface 506. The memory 504 may store instructions which when executed using the processor 502 may cause the system 500 to render the functionality associated with forwarding a command stream as described herein. For example, the memory 504 may store instructions which when executed using the processor 504 may cause the system 500 to render the functionality associated with the target redirector 132, the target command API 136, the target redirector cache 144 and the target protocol stack 128 as described herein. In addition, data structures, temporary variables and other information may store data in data storage 508.

The processor 502 may comprise a single processor or multiple processors that may be disposed on a single chip, on multiple devices or distributed over more that one system. The processor 502 may be hardware that executes computer executable instructions or computer code embodied in the memory 504 or in other memory to perform one or more features of the system. The processor 502 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 504 may comprise a device for storing and retrieving data, processor executable instructions, or any combination thereof. The memory 504 may include non-volatile and/or volatile memory, such as a random access memory (RAM), a read-only memory (ROM), an erasable programmable read-only memory (EPROM), or a flash memory. The memory 504 may comprise a single device or multiple devices that may be disposed on one or more dedicated memory devices or on a processor or other similar device. Alternatively or in addition, the memory 504 may include an optical, magnetic (hard-drive) or any other form of data storage device.

The memory 504 may store computer code, such as the target redirector 132, the target command API 136, the target redirector cache 144 and the target protocol stack 128 as described herein. The computer code may include instructions executable with the processor 502. The computer code may be written in any computer language, such as C, C++, assembly language, channel program code, and/or any combination of computer languages. The memory 504 may store information in data structures including, for example, vertices. The memory 504 may store commands in the target command queue 138.

The I/O interface 506 may be used to connect devices such as, for example, a target receiver 510, a target transmitter 512, the target execution device 140 and to other components of the system 500.

All of the disclosure, regardless of the particular implementation described, is exemplary in nature, rather than limiting. The system 500 may include more, fewer, or different components than illustrated in Figure 5. Furthermore, each one of the components of system 500 may include more, fewer, or different elements than is illustrated in Figure 5. Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

The components of system 300 and system 500 may be identical when the source platform 102 and the target platform 104 execute on the same computing device. For example, the memory 304 may store instructions which when executed using the processor 302 may cause the system 300 to render the functionality associated with the target redirector 132, the target command API 136, the target redirector cache 144 and the target protocol stack 128 as described herein. In addition, data structures, temporary variables and other information may store data in data storage 508 that may be stored in memory 304.

The system and method for forwarding a command stream have been described using as an illustrative example a single command stream forwarded from the source platform 102 to the target platform 104. The system and method for forwarding a command stream are also applicable when multiple concurrent command streams are forwarded from the source platform 102 to the target platform 104, and also when one or more command streams are forwarded from the source platform 102 to the target platform 104 concurrently with one or more command streams are forwarded from the target platform 104 to the source platform 102.

The functions, acts or tasks illustrated in the figures or described may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing, distributed processing, and/or any other type of processing. In one embodiment, the instructions are stored on a removable media device for reading by local or remote systems. In other embodiments, the logic or instructions are stored in a remote location for transfer through a computer network or over telephone lines. In yet other embodiments, the logic or instructions may be stored within a given computer such as, for example, a CPU.

While various embodiments of the system and method for on-demand user control have been described, it will be apparent to those of ordinary skill in the art that many more embodiments and implementations are possible within the scope of the present invention. Accordingly, the invention is not to be restricted except in light of the attached claims and their equivalents.

## Claims

1. A method for forwarding a command stream comprising:
receiving (202) a source command stream (108), encoded for execution by a source platform (102) using a source command semantic, where the source command stream (108) contains command information executable as commands;
processing (204) the received source command stream (108) to generate a processed command stream (118) where the processed command stream (118) contains equivalent command information to the command information contained in the source command stream (102);
encoding (206) the processed command stream (118) to generate a source formatted command stream (122); and
sending (208) the source formatted command stream (122) to a target platform (104) where the source formatted command stream (122) is convertible to a target command semantic executable as commands by the target platform (104).

2. The method for forwarding a command stream of claim 1, where each of the source command semantic and the target command semantic is based on any of: OpenCL ™, WebCL ™, OpenSL ES ™, OpenMAX ™ AL, OpenMAX ™ IL and StreamInput.

3. The method for forwarding a command stream of claim 1, where the source command semantic and the target command semantic are different.

4. The method for forwarding a command stream of claim 1, where the command information may include any of: a command, a response and data.

5. The method for forwarding a command stream of claim 1, where the command information is cached.

6. The method for forwarding a command stream of claim 1, where the act of processing (204) the received source command stream to generate a processed command stream (118) reduces the amount of the command information.

7. The method for forwarding a command stream of claim 6, where the act of processing (204) that reduces the amount of command information may include any one or more of: applying data compression to the command information, returning a cached response and transmitting a code associated with cached command information in place of the command information.

8. The method for forwarding a command stream of claim 1, where the source formatted command stream (122) includes command information and metadata.

9. The method for forwarding a command stream of claim 8, where the metadata includes any one or more of: initialization instructions, synchronization information, timing information, error correction codes and retransmission requests.

10. The method for forwarding a command stream of claim 1, where the source formatted command stream (122) is sent to the target platform using a wired or a wireless network.

11. The method for forwarding a command stream of claim 1, where the source formatted command stream (122) is sent to the target platform (104) using a transmission control protocol or a user datagram protocol.

12. The method for forwarding a command stream of claim 1, where the source formatted command stream (122) is sent to one or more target platforms (104).

13. A system for forwarding a command stream comprising:
a processor (302); and
a memory (304) coupled to the processor (302) containing instructions, executable by the processor (302), for performing the method of any of claims 1 to 12.
